# EUROPÄISCHE PATENTSCHRIFT

(11) **EP 1 509 764 B1**
(45) Veröffentlichungstag und Bekanntmachung des Hinweises auf die Patenterteilung: **16.07.2008**
(21) Anmeldenummer: 03755074.6
(22) Anmeldetag: 29.04.2003
(51) Int. Cl.: G01N 27/406, G01N 27/407

(54) **HEIZEINRICHTUNG**
HEATING DEVICE
DISPOSITIF DE CHAUFFAGE

(30) Priorität: 23.05.2002 DE 10222791
(43) Veröffentlichungstag der Anmeldung: 02.03.2005
(73) Patentinhaber: ROBERT BOSCH GMBH, 70442 Stuttgart (DE)
(72) Erfinder: HEIMANN, Detlef, 70839 Gerlingen (DE); WAHL, Thomas, 75172 Pforzheim (DE); DIEHL, Lothar, 70839 Gerlingen (DE); MOSER, Thomas, 71701 Schwieberdingen (DE); RODEWALD, Stefan, 71254 Ditzingen (DE)
(86) Internationale Anmeldenummer: PCT/DE2003/001372
(87) Internationale Veröffentlichungsnummer: WO 2003/100409

(56) Entgegenhaltungen:
- EP-A- 0 845 669
- DE-A- 19 834 276
- US-A- 5 670 032
- US-B1- 6 350 357

## Beschreibung

### Stand der Technik

Die Erfindung geht aus von einem Sensorelement mit Heizeinrichtung nach dem Oberbegriff des unabhängigen Anspruchs.

Eine derartige Heizeinrichtung ist beispielsweise aus der DE 198 34 276 A1 zur Beheizung eines Sensorelements bekannt, das in einem Gasmessfühler zur Abgasanalyse bei Verbrennungsmotoren eingesetzt wird. Das Sensorelement weist Festelektrolytschichten und Elektroden sowie eine schichtförmig aufgebaute Heizeinrichtung auf. Die Heizeinrichtung ist auf einer Festelektrolytschicht oder zwischen einer Festelektrolytschicht und einer weiteren Festelektrolytschicht angeordnet. Die Heizeinrichtung beinhaltet ein Heizelement, beispielsweise aus einer elektrischen Widerstandsschicht, sowie eine Isolierung, in die das Heizelement eingebettet ist. Die Isolierung besteht im wesentlichen aus Aluminiumoxid. Durch die Isolierung wird das Heizelement gegen die Festelektrolytschichten und die Elektroden elektrisch, also sowohl bezüglich Elektronen- als auch Ionenleitung, isoliert werden, so dass durch den Betrieb der Heizeinrichtung die Funktion des Sensorelements nicht beeinträchtigt wird.

Die Heizeinrichtung wird hergestellt, indem auf eine sogenannte Grünfolie, also eine ungesinterte keramische Folie, in Dünn- oder Dickschichttechnik eine untere Schicht der Isolierung, das Heizelement und eine obere Schicht der Isolierung aufgebracht werden. Anschließend wird die mit der Heizeinrichtung bedruckte Grünfolie mit anderen Grünfolien, auf die beispielsweise Elektroden gedruckt sein können, zusammenlaminiert und gesintert.

Die Isolierung ist häufig porös ausgebildet. Der Porenanteil der Isolierung wird durch die Zugabe eines Porenbildners vor dem Sintern erreicht. Beim Sintern verbrennt der Porenbildner, so dass eine poröse Struktur entsteht.

Durch die zugegebene Menge des Porenbildners, beispielsweise Glaskohle, wird der Porenanteil eingestellt

Aus der DE 198 53 601 A1 ist weiterhin eine sogenannte Breitband-Lambda-Sonde zur Bestimmung des Sauerstoffgehaltes in Abgasen von Verbrennungsmotoren bekannt. Das Sensorelement der Sonde umfasst eine Heizeinrichtung, die durch eine Isolierung von einer Festelektrolytschicht elektrisch isoliert ist. Zur Vermeidung von Leckströmen enthält die Isolierung ein Gemisch aus Aluminiumoxid, Bariumoxid und/oder Strontiumoxid.

Bei einem derartigen Sensorelement ist nachteilig, dass die Festelektrolytschicht und die angrenzende, Barium und/oder Strontium enthaltende Isolierung sich in ihrem Sinterverhalten, insbesondere bezüglich der Sinterschrumpfung, deutlich unterscheiden. Ebenfalls unterschiedlich sind die Wärmeausdehnungskoeffizienten der Isolierung und der Festelektrolytschicht. Aus der schlechten Anbindung der Isolierung an die Festelektrolytschicht resultieren beispielsweise bei schnellen Temperaturwechseln Risse, die die Funktion des Sensorelements beeinträchtigen.

Ein Heizelement mit zwei Isolationsschichten, von der die erste, bis zu 5% MgO oder CaO enthält, ist aus EP0845669 bekannt.

### Vorteile der Erfindung

Das erfindungsgemäße Sensorelement mit den kennzeichnenden Merkmalen des unabhängigen Anspruchs hat demgegenüber den Vorteil, dass zum einen von dem Heizelement ausgehende Leckströme weitgehend verhindert werden und dass zum anderen die Gefahr von Rissen im Heizelement aufgrund einer schlechten Anbindung an eine an die Heizeinrichtung angrenzende Festelektrolytfolie stark verringert wird.

Hierzu wird das Heizelement von einer ersten Isolierung umgeben, an die eine zweite Isolierung angrenzt. Die erste Isolierung weist einen höheren Anteil (angegeben in Gewichtsprozent) an Barium auf als die zweite Isolierung. Die zweite Isolierung liegt damit bezüglich ihres Sinterverhaltens und ihres Wärmeausdehnungskoeffizienten zwischen den Eigenschaften der ersten Isolierung und der Festelektrolytschicht.

Durch die in den abhängigen Ansprüchen aufgeführten Maßnahmen sind vorteilhafte Weiterbildungen des im unabhängigen Anspruch angegebenen Sensorelements möglich.

Als besonders vorteilhaft hat sich erwiesen, dass die erste Isolierung Barium mit einem Anteil von 3 bis 15 Gewichtsprozent und die zweite Isolierung Barium mit einem Anteil von 0 bis 4 Gewichtsprozent enthält. Als weiteren Bestandteil weist die erste und zweite Isolierung Aluminiumoxid auf.

Vorteilhaft beträgt die Schichtdicke der ersten Isolierung 5 bis 40 µm und die Schichtdicke der zweiten Isolierung 5 bis 20. Dabei kann die erste Isolierung eine obere und eine untere Schicht aufweisen, zwischen denen das Heizelement angeordnet ist. Unter der Schichtdicke der ersten Isolierung ist in diesem Fall die Summe der Schichtdicken der oberen und der unteren Schicht der ersten Isolierung zu verstehen. Ebenso kann die zweite Isolierung eine obere und eine untere Schicht aufweisen, zwischen denen die erste Isolierung und das Heizelement vorgesehen ist. Die Schichtdicke der zweiten Isolierung bezieht sich in diesem Fall auf die einzelne Schichtdicke der oberen oder der unteren Schicht der zweiten Isolierung. Die angegebenen Schichtdicken sind vorteilhaft, da bei Schichtdicken größer 5 µm eine Beeinträchtigung der Isolationswirkung durch Fehlstellen weitgehend vermieden wird, und da bei Schichtdicken kleiner 40 µm für die erste Isolierung und 20 µm für die zweite Isolierung die Gefahr der Rissbildung vermieden wird.

Wenn Feuchtigkeit beispielsweise über eine Kontaktierung in das Heizelement der Heizeinrichtung eindringen kann, können in der Isolierung Risse auftreten. Die Rissbildung wird besonders wirkungsvoll verhindert, wenn die erste Isolierung einen höheren Porenanteil als die zweite Isolierung aufweist-Ausführungsbeispiels eines planaren Sensorelements mit einer erfindungsgemäßen Heizeinrichtung.

### Beschreibung des Ausführungsbeispiels

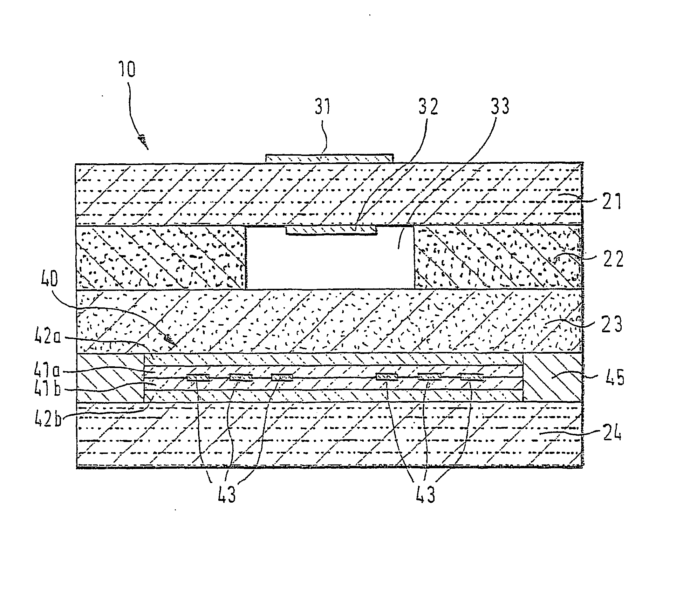

Die Figur zeigt als Ausführungsbeispiel der Erfindung ein planares, schichtförmig aufgebautes Sensorelement 10 mit einer ersten, zweiten, dritten und vierten sauerstoffionenleitenden Festelektrolytschicht 21, 22, 23, 24 aus mit Yttriumoxid stabilisiertem Zirkonoxid. Auf der ersten Festelektrolytschicht 21 ist auf einer Außenseite des Sensorelements 10 eine erste Elektrode 31 angeordnet, die einem Messgas ausgesetzt ist. Weiterhin ist auf der ersten Festelektrolytschicht 21 auf der der ersten Elektrode 31 abgewandten Seite eine zweite Elektrode 32 angeordnet, die einem Referenzgas in einem Referenzgaskanal 33 ausgesetzt ist. Der Referenzgaskanal 33 ist in die zweite Festelektrolytschicht 22 eingebracht und steht mit einer außerhalb des Sensorelements 10 gelegenen Referenzgasatmosphäre in Verbindung (nicht dargestellt).

Die erste und die zweite Elektrode 31, 32 sowie die erste Festelektrolytschicht 21 bilden eine elektrochemische Zelle, die beispielsweise potentiometrisch betrieben wird. Bei unterschiedlichem Sauerstoffpartialdruck von Messgas und Referenzgas liegt zwischen der ersten und der zweiten Elektrode 31, 32 die sogenannte Nernstspannung an, mit der der Sauerstoffpartialdruck im Messgas bestimmt werden kann.

Da die Ionenleitfähigkeit des Festelektrolyten temperaturabhängig ist, ist es erforderlich, das Sensorelement 10 auf eine gleichmäßige Temperatur aufzuheizen. Hierzu ist zwischen der dritten und der vierten Festelektrolytschicht 23, 24 eine Heizeinrichtung 40 vorgesehen, die seitlich von einem Dichtrahmen 45 umgeben ist.

Die Heizeinrichtung 40 weist ein Heizelement 43 auf, das aus einer Platin enthaltenden Widerstandsschicht besteht. Das Heizelement 43 ist zwischen einer oberen und einer unteren Schicht 41a, 41b einer ersten Isolierung 41 eingebettet. Die erste Isolierung 41 mit dem Heizelement 43 ist zwischen einer oberen und einer unteren Schicht 42a, 42b einer zweiten Isolierung 42 angeordnet. Die erste und die zweite Isolierung 41, 42 enthalten als Hauptbestandteil Aluminiumoxid. Die Herstellung derartiger Isolierungen 41, 42 ist dem Fachmann allgemein bekannt und wird nicht im Detail dargestellt.

In einer ersten Ausführungsform des Ausführungsbeispiels weist die erste Isolierung 41 im gesinterten Sensorelement 10 zusätzlich zum Aluminiumoxid Barium mit einem Anteil von 9 Gewichtsprozent auf. Die zweite Isolierung 42 enthält kein Barium. Die Summe der Schichtdicken der oberen und unteren Schicht 41a, 41b der ersten Isolierung 41 beträgt 25 µm. Die Schichtdicke der oberen beziehungsweise der unteren Schicht 42a, 42b der zweiten Isolierung 42 beträgt jeweils 10 µm.

Die erfindungsgemäße Heizeinrichtung lässt sich auch bei anderen Sensortypen, beispielsweise eine Breitband-Lambda-Sonde oder einen NOx-Sensor, einsetzen. Bei einer Breitband-Lambda-Sonde, wie sie beispielsweise in der DE 198 53 601 A1 oder in "Automotive electronics handbook", 2. Ausgabe 1999, Herausgeber: Ronald K. Jurgen, McGraw-Hill, Kapitel 7 sowie in den dort zitierten Schriften beschrieben ist, enthält das Sensorelement eine elektrochemische Nernstzelle und eine elektrochemische Pumpzelle. Mittels der Pumpzelle wird Sauerstoff derart in einen Messgasraum hereingepumpt oder aus dem Messgasraum herausgepumpt, dass im Messgasraum ein Sauerstoffpartialdruck von Lamda=1 vorliegt. Die Pumpzelle wird hierzu über die Nernstzelle geregelt, die den Sauerstoffpartialdruck im Messgasraum misst. Aus dem in der Pumpzelle fließenden Pumpstrom lässt sich der Sauerstoffpartialdruck des Abgases ermitteln. Durch die erfindungsgemäße Heizeinrichtung können Einkopplungen und Fehlerströme sowohl in die Nernstzelle als auch in die Pumpzelle einer Breitband-Lambda-Sonde vermindert und damit die Genauigkeit der Breitband-Lambda-Sonde deutlich erhöht werden.

## Patentansprüche

1. Sensorelement (10) insbesondere zum Einsatz in der Abgasanalyse von Verbrennungsmotoren, mit Heizeinrichtung (40), die ein eine elektrische Widerstandsschicht aufweisendes Heizelement (43) umfasst, das durch eine Barium enthaltende Schicht elektrisch von mindestens einer Festelektrolytschicht (23, 24) isoliert ist, **dadurch gekennzeichnet, dass** das Heizelement (43) in eine erste Isolierung (41) eingebettet ist, an die eine zweite Isolierung (42) angrenzt, wobei der in Gewichtsprozent angegebene Anteil an Barium der ersten Isolierung (41) höher ist als der entsprechende Anteil der zweiten Isolierung (42).

2. Sensorelement nach Anspruch 1, **dadurch gekennzeichnet, dass** die erste und die zweite Isolierung (41, 42) Aluminiumoxid enthalten.

3. Sensorelement nach Anspruch 1 oder 2, **dadurch gekennzeichnet, dass** die erste Isolierung (41) einen Anteil an Barium von 3 bis 15 Gewichtsprozent, vorzugsweise 7 Gewichtsprozent, aufweist.

4. Sensorelement nach einem der vorhergehenden Ansprüche, **dadurch gekennzeichnet, dass** die zweite Isolierung (42) einen Anteil an Barium von 0 bis 4 Gewichtsprozent aufweist.

5. Sensorelement nach einem der vorhergehenden Ansprüche, **dadurch gekennzeichnet, dass** die Schichtdicke der ersten Isolierung (41) 5 bis 40 µm, vorzugsweise 25 µm, beträgt.

6. Sensorelement nach einem der vorhergehenden Ansprüche, **dadurch gekennzeichnet, dass** die Schichtdicke der zweiten Isolierung (42) 5 bis 20 µm, vorzugsweise 10 µm, beträgt

7. Sensorelement nach einem der vorhergehenden Ansprüche, **dadurch gekennzeichnet, dass** das Barium in die erste und/oder zweite Isolierung (41, 42) vor dem Sintern in Form einer geeigneten Bariumverbindung, insbesondere in Form von BaCO₃, BaSO₄, Ba(NO₃)₂ oder BaO₂ zugesetzt wird.

8. Sensorelement nach einem der vorhergehenden Ansprüche, **dadurch gekennzeichnet, dass** zwischen der ersten und der zweiten Isolierung (41, 42) mindestens eine weitere Isolierung vorgesehen ist, deren Anteil an Barium zwischen dem der ersten Isolierung (41) und dem der zweiten Isolierung (42) liegt.

9. Sensorelement nach einem der vorhergehenden Ansprüche, **dadurch gekennzeichnet, dass** die erste Isolierung (41) einen höheren Porenanteil als die zweite Isolierung (42) aufweist.

10. Sensorelement nach einem der vorherigen Ansprüche, **dadurch gekennzeichnet, dass** die Heizeinrichtung (40) seitlich von einem Dichtrahmen (45) aus ionenleitendem Material umgeben ist.

## Claims

1. Sensor element (10) in particular for use in the analysis of exhaust gases from internal combustion engines, having a heater device (40) which comprises a heater element (43) which has an electrical resistor layer and which is electrically insulated from at least one solid electrolyte layer (23, 24) by means of a barium-containing layer, **characterized in that** the heater element (43) is embedded into a first insulation (41) which is adjoined by a second insulation (42), with the proportion, specified in weight percent, of barium of the first insulation (41) being higher than the corresponding proportion of the second insulation (42).

2. Sensor element according to Claim 1, **characterized in that** the first and second insulation (41, 42) contain aluminium oxide.

3. Sensor element according to Claim 1 or 2,
**characterized in that** the first insulation (41) has a proportion of barium of 3 to 15 weight percent, preferably 7 weight percent.

4. Sensor element according to one of the preceding claims, **characterized in that** the second insulation (42) has a proportion of barium of 0 to 4 weight percent.

5. Sensor element according to one of the preceding claims, **characterized in that** the layer thickness of the first insulation (41) is 5 to 40 µm, preferably 25 µm.

6. Sensor element according to one of the preceding claims, **characterized in that** the layer thickness of the second insulation (42) is 5 to 20 µm, preferably 10 µm.

7. Sensor element according to one of the preceding claims, **characterized in that** the barium is added into the first and/or second insulation (41, 42), before sintering, in the form of a suitable barium compound, in particular in the form of BaCO₃, BaSO₄, Ba (NO₃) or BaO₂.

8. Sensor element according to one of the preceding claims, **characterized in that** at least one further insulation, whose proportion of barium is between that of the first insulation (41) and that of the second insulation (42), is provided between the first and second insulation (41, 42).

9. Sensor element according to one of the preceding claims, **characterized in that** the first insulation (41) has a higher proportion of pores than the second insulation (42).

10. Sensor element according to one of the preceding claims, **characterized in that** the heater device (40) is laterally surrounded by a sealing frame (45) composed of ion-conducting material.

## Revendications

1. Elément de capteur (10) notamment destiné à l'analyse des gaz d'échappement émis par des moteurs à combustion interne comportant une installation de chauffage (40) ayant un élément chauffant (43) muni d'une couche à résistance électrique, isolée électriquement par rapport à au moins une couche d'électrolyte solide (23, 24) par une couche contenant du baryum,
**caractérisé en ce que**
l'élément chauffant (43) est intégré dans une première isolation (41) à laquelle est adjacente une seconde isolation (42),
le pourcentage pondéral de baryum de la première isolation (41) étant supérieur à celui de la composante correspondante de la seconde isolation (42).

2. Elément de capteur selon la revendication 1,
**caractérisé en ce que**
la première et la seconde isolation (41, 42) contiennent de l'oxyde d'aluminium.

3. Elément de capteur selon la revendication 1 ou 2,
**caractérisé en ce que**
la première isolation (41) comporte une teneur en baryum comprise entre 3 % et 15 % en poids et de préférence 7 % en poids.

4. Elément de capteur selon l'une des revendications précédentes,
**caractérisé en ce que**
la seconde isolation (42) présente une teneur en baryum comprise entre 0 % et 4 % en poids.

5. Elément de capteur selon l'une des revendications précédentes,
**caractérisé en ce que**
l'épaisseur de couche de la première isolation (41) est comprise entre 5 µm et 40 µm et de préférence égale à 25 µm.

6. Elément de capteur selon l'une des revendications précédentes,
**caractérisé en ce que**
l'épaisseur de couche de la seconde isolation (42) est comprise entre 5 µm et 20 µm et de préférence elle est égale à 10 µm.

7. Elément de capteur selon l'une des revendications précédentes,
**caractérisé en ce qu'**
avant le frittage, le baryum de la première et/ou de la seconde isolation (41, 42) est ajouté sous la forme d'une composition appropriée de baryum notamment sous la forme de BaC0₃, BaS0₄, Ba(NO₃)₂ ou Ba0₂.

8. Elément de capteur selon l'une des revendications précédentes,
**caractérisé par**
au moins une autre isolation entre la première et la seconde isolation (41, 42) et dont la teneur en baryum se situe entre celle de la première isolation (41) et celle de la seconde isolation (42).

9. Elément de capteur selon l'une des revendications précédentes,
**caractérisé en ce que**
la première isolation (41) a une teneur en pores plus élevée que celle de la seconde isolation (42).

10. Elément de capteur selon l'une des revendications précédentes,
**caractérisé en ce que**
l'installation de chauffage (40) est entourée latéralement par un châssis étanche (45) en une matière conductrice d'ions.
